# EUROPÄISCHE PATENTSCHRIFT

(11) **EP 3 909 786 B1**
(45) Veröffentlichungstag und Bekanntmachung des Hinweises auf die Patenterteilung: **11.02.2026**
(21) Anmeldenummer: 20405018.1
(22) Anmeldetag: 12.05.2020
(51) Int. Cl.: B60B 35/10

(54) **EINRICHTUNG ZUM VERSTELLEN DER SPUR EINER FAHRACHSE EINES WENIGSTENS EINACHSIGEN STRASSEN- UND/ODER GELÄNDEGÄNGIGEN FAHRZEUGES**
DEVICE FOR ADJUSTING THE TRACK OF A AXLE OF A ROAD AND/OR OFF-ROAD VEHICLE WITH AT LEAST ONE AXLE
DISPOSITIF DE RÉGLAGE DE LA VOIE D'UN AXE D'UN VÉHICULE ROUTIER ET/OU TOUT TERRAIN À AU MOINS UN AXE

(43) Veröffentlichungstag der Anmeldung: 17.11.2021
(73) Patentinhaber: LÜÖND und CO. AG, 8842 Unteriberg (CH)
(72) Erfinder: Lüönd, Ruedi, 8840 Einsiedeln (CH)
(74) Vertreter: Fenner, Seraina

(56) Entgegenhaltungen:
- CH-A- 472 997
- CH-A5- 693 740
- DE-A1- 102012 024 247
- US-A- 2 901 050

## Beschreibung

Die Erfindung betrifft eine Einrichtung zum Verstellen der Spur einer Fahrachse eines wenigstens einachsigen, strassen- und/oder geländegängigen Fahrzeuges, vornehmlich eines Anhängers oder selbstfahrenden Motorfahrzeuges, bestehend aus einer quer zur Fortbewegungsrichtung angeordneten Fahrachse, die beidenends Räder und ein aufgebautes Traggestell zur Befestigung einer Ladefläche, eines Laderaumes oder eines Arbeitsgerätes aufweist, wobei die Fahrachse zwischen den Rädern durch tragende Stützelemente mit dem darüber angeordneten Traggestell verbunden ist.

Bei der Fortbewegungsrichtung kann die Vorwärts- oder Rückwärtsfahrt des Fahrzeuges gemeint sein.

Nicht nur bei Fahrzeugen mit grossen resp. voluminösen Ladekapazitäten mit einem sich mit zunehmender Ladehöhe nach oben verändernden Schwerpunkt, insbesondere auch bei landwirtschaftlichen Erntefahrzeugen wie gezogene Ladewagen oder selbstfahrenden Erntefahrzeugen resp. Transportern mit einem beispielsweise an der Heckseite beschickbaren Laderaum, besteht in Hanglagen, insbesondere beim Befahren der Schichtenlinien bzw. dem Hang entlang zur Futteraufnahme oder beim Wenden in Hanglagen die Gefahr des seitlichen Kippens, und weiterhin eine nach dem Strassengesetz vorgeschriebene Fahrzeugbreite, die sich auf das Ladegewicht und -volumen bestimmend auswirkt.

Eine begleitete Recherche beim Eidgenössischen Institut für Geistiges Eigentum führte zu der DE-893756 für einen Kraftwagen mit verringerbaren Breitenabmessungen, mit einer Karosserie von einer den Platzbedarf einer Person nicht übersteigenden Breite, und mit hintereinander angeordneten Sitzen, der vorderen Räder in Fahrstellung eine grössere Spurbreite als des die Breite der Schale aufweisenden Radpaares.

Die US 2 901 050 A zeigt einen Kranträger, der zur Verbreiterung der Spur die Räder an den beiden Seiten mit zwei unabhängigen Zylindern verstellt.

Die DE 10 2012 024247 A1 offenbart einen Tieflader mit variabler Breite und Spurweite.

Es hat sich an die vorliegende Erfindung die Aufgabe gestellt, die Standfestigkeit eines an die Strassenverkehrsgesetzgebung gebundenen Fahrzeuges bezüglich Hangtauglichkeit in Hanglagen, insbesondere in unebenem Gelände zu verbessern resp. sich ändernden Fahrgegebenheiten anpassen zu können.

Erfindungsgemäss wurde die Aufgabe dadurch gelöst, dass die an den Enden antreibbare Räder aufweisende Fahrachse durch sich horizontal in die Spur erstreckende Radträger ausgebildet ist, die mit wenigstens einem ventilgesteuerten Hydraulikzylinder zur Spuränderung verbunden und durch angelenkte Stützträger mit wenigstens einem darüber angeordneten Querträger das Traggestell bildend seitlich und entgegengesetzt verstellbar sind und dass die Stützträger jeweils näherungsweise zu der Innenseite der Räder an den Radträgern angelenkt und durch ein an dem Querträger aufgehängtes Schubstangengetriebe antriebsverbunden sind, und dass das Schubstangengetriebe einen um eine in Fortbewegungsrichtung angeordnete Achse schwenkbaren Doppelhebel aufweist, dessen Hebelenden jeweils durch Schubstangen mit den Stützträgern verbunden sind.

Die Einrichtung zeichnet sich durch den weiteren Vorteil aus, dass durch die Verbreiterung der Fahrachse das Traggestell und dadurch der Schwerpunkt abgesenkt und die Ladekapazität erhöht warden kann.

Die Einrichtung gewährt eine verstellbar grössere Auflageebene des Fahrzeuges auf der zu befahrenden Bodenoberfläche, eine höhere Betriebsverlässichkeit und - sicherheit, und erhöht beim Fahrer das Vertrauen in die Maschinen und Geräte.

Es ist vorteilhaft, wenn die Radträger während dem Fahren eines Fahrzeuges gemeinsam seitlich verstellbar sind, um den Betrieb und Verschleiss der Bauteile des Fahrzeuges zu schonen.

Es ist günstig, wenn der Hydraulikzylinder innerhalb der Radträger in den Endbereichen der Fahrachse befestigt ist, sodass eine Übersichtlichkeit und Zugänglichkeit u.a. für den Unterhalt der Einrichtung und das Fahrzeug entsteht.

Sollte es sich bei der Verwendung der Einrichtung um ein grösseres und/oder schwereres Fahrzeug handeln, bei dem grössere Kräfte zur Verrstellung der Spur erforderlich sind, ist zu empfehlen, dass in Fahrtrichtung F, F' betrachtet jeweils ein Hydraulikzylinder parallel und vor und hinter der Fahrachse angeordnet und an den Enden an verlängerten Steckbolzen der Stützträger befestigt sind.

Die Einrichtung gestattet zur Verstellung der Radträger diesen zugeordnete Hydraulikzylinder die an einem Ende am Traggestell abgestützt und gemeinsam antriebsverbunden sind.

Vorteilhafterweise ist das Traggestell durch zwei parallel angeordnete Querträger ausgebildet, die die Befestigung und den Abbau eines Aufbaus auf/von dem Traggestell einfach gestalten, indem sie eine Befestigungsebene bilden.

Es erweist sich zur Versteifung der Einrichtung als vorteilhaft, wenn das Traggestell quer zur Fortbewegungsrichtung einen dreieckförmigen Querschnitt aufweist.

Eine besondere Robustheit der Einrichtung kann dadurch erreicht warden, wenn die die Fahrachse bildenden Radträger bei verbreiteter Spur mit den Stützträgern und den Querträgern ein räumlich trapezförmig verstellbares Traggestell bilden.

Zweckmässig ist der Doppelhebel in der Längsmittelachse des Fahzeuges an der Unterseite des Traggestells schwenkbar befestigt und die Enden der Hebel des Doppelhebels sind durch Schubstangen mit den Stützträgern verbunden, sodass eine günstige Funktionalität der Einrichtung zugunsten des Fahrverhaltens und eine Verwendung gleicher Bauteile entsteht.

Im Sinn einer ökonomischen Verwendung sind die Radträger zur ventilgesteuerten Verstellbarkeit mit einem doppelwirkenden Hydraulikzylinder antriebsverbunden.

Vorzugsweise ist der Doppelhebel des Schubstangengetriebes in der Längsmittelachse des Traggestells an der Unterseite eines Querträgers schwenkbar befestigt, zur gleichmässigen Verteilung der auf die Stützträger wirkenden Kräfte.

Zur Stabilisierung des Traggestells und zur Unterstützung der Steifigkeit sind die Radträger jeweils an den inneren Enden durch wenigstens eine Aufhängevorrichtung mit dem/den Querträgern verbunden.

Als alternative Ausführung der Einrichtung erweist sich eine Fahrachse mit teleskopartig geführten Radträgern, die mit dem ventilgesteuerten, doppelwirkenden Hydraulikzylinder antriebsverbunden sind.

Die Radträger sind bei dieser einfachen Ausführung zu diesem Zweck rohrförmig ausgebildet und der Hydraulikzylinder ist in den Endbereichen der Fahrachse innerhalb der Radträger befestigt.

Es erweist sich als schonend für die beanspruchten Teile der Einrichtung, wenn die Spur der Fahrachse während dem Fahren mit dem Fahrzeug geändert wird.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand mehrerer Ausführungsbeispiele anschliessend näher beschrieben. In der Zeichnung zeigen:
- Fig.: 1 eine Ausführung der erfindungsgemässen Einrichtung zum Verstellen der Spurbreite einer Fahrachse eines nach dem Strassenverkehrsgesetz zulässigen strassen- und/oder geländegängigen Fahrzeuges,
- Fig. 2: die in Fig. 1 dargestellte Einrichtung mit verbreiterter Spur der Fahrachse,
- Fig.3: einen Schnitt durch die Einrichtung gemäss Fig. 1 nach der senkrechten Ebene A - A in der Längsmittelachse eines Fahrzeuges,
- Fig. 4: eine alternative Ausführung der erfindungsgemässen Einrichtung zum Verstellen der Spurbreite einer Fahrachse eines nach Verkehrsgesetz zulässigen strassen- und/oder geländegängigen Fahrzeuges,
- Fig. 5: die Einrichtung nach Fig. 4 mit verbreiteter Spur der Fahrachse,
- Fig. 6: einen Schnitt durch die Einrichtung gemäss Fig. 4 nach der Senkrechten Ebene B - B in der Fahrzeuglängsmittelachse,
- Fig. 7: eine räumliche Darstellung der in Fig. 2 veranschaulichten verbreiterten Einrichtung,
- Fig. 8: eine Seitenansicht eines landwirtschaftlichen und/oder kommunalen Einachsanhängers, beispielsweise eines Ladewagens,
- Fig. 9: eine Seitenansicht eines selbstfahrenden landwirtschaftlichen und/oder kommunalen Motorfahrzeuges, beispielsweise eines Transporters mit der erfindungsgemässen Einrichtung an einer Tandem-Hinterachse und
- Fig.10 eine: Ansicht der Heckseite des in Fig. 9 dargestellten Fahrzeuges.

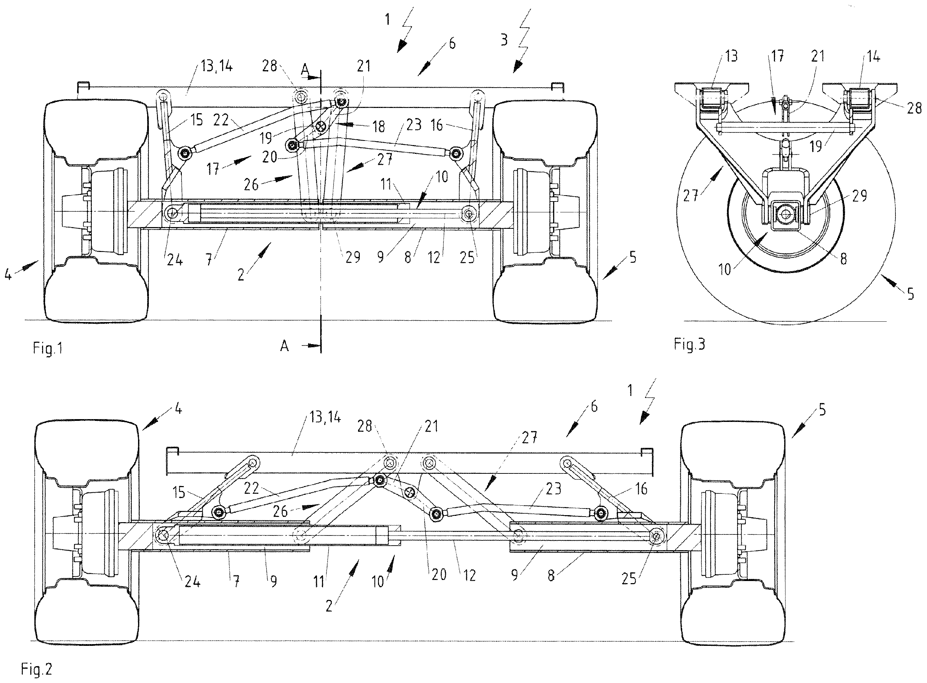

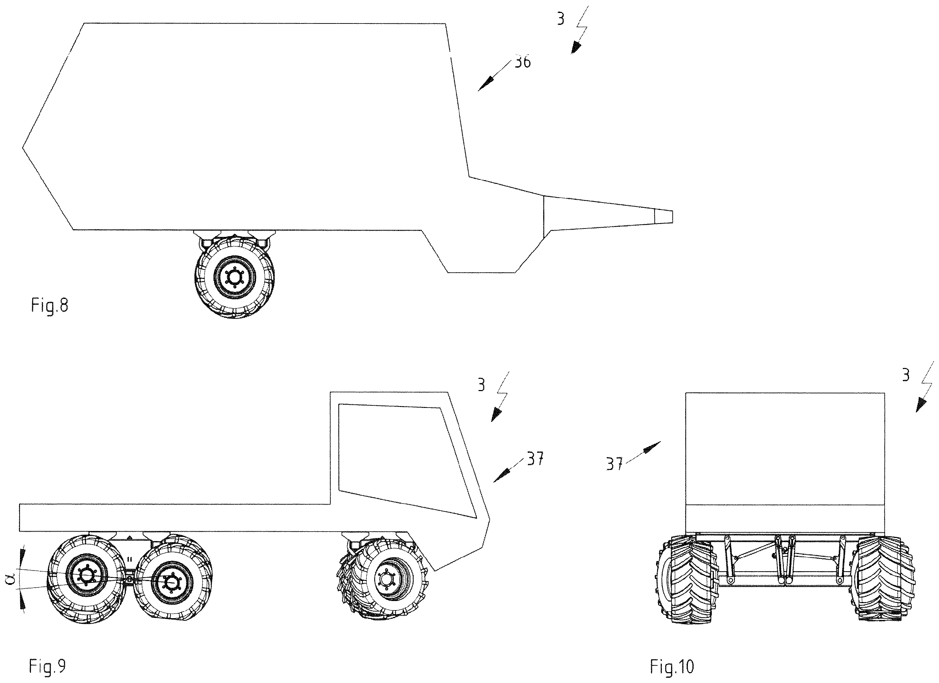

Fig. 1 veranschaulicht eine erfindungsgemässe Einrichtung 1 zum Verstellen der Spur/Spurbreite einer Fahrachse 2 eines wenigstens einachsigen, strassen- und/ oder geländegängigen Fahrzeuges, wie sie beispielhaft in den Figuren 8 bis 10 dargestellt sind.

Hierbei handelt es sich um schleppergezogene ein- oder mehrachsige Anhänger wie Lade- oder Erntewagen oder um selbstfahrende Motorfahrzeuge mit einer nachlaufenden Fahrachse, mit aufgebauter Ladefläche oder aufgebautem Laderaum für loses Gut, beispielsweise landwirtschaftliches Erntegut oder Stückgut.

Die Einrichtung 1 eignet sich auch ebenso vorteilhaft für ein Fahrzeug mit aufgebautem Miststreuer oder Güllefass.

Die quer zur Fortbewegungsrichtung F oder F' angeordnete Fahrachse 2 weist an den Enden ein bereiftes Rad 4, 5 auf, auf denen das Fahrgestell 6 auf dem Boden abgestützt ist. Zu diesem Zweck sind die Räder 4, 5 durch eine Radnabe an den Enden der Fahrachse 2 frei drehbar oder angetrieben gelagert.

Die dem Traggestell 6 zugeordnete Fahrachse 2 ist zweiteilig aus horizontalen Radträgern 7 und 8 gebildet, die sich zur Fahrachse ergänzen und im Mittenbereich zwischen den Räder 4, 5 resp. sich mit den freien Enden der Radträger 7, 8 gegenüberstehen oder die Fahrachse 2 bildend, jedoch nicht zwingend bei der schmalsten Spur aneinander stossen.

Die Radträger 7, 8 sind zwischen den Rädern 4, 5 vorzugsweise durch gleichartige Rohre ausgestaltet und bilden einen Hohlraum 9, eine Hohlachse, in dem ein ventilsteuerbarer, doppelwirkender Hydraulikzylinder 10 die Radträger 7, 8 nach aussen und/oder innen antreibbar verbindet.

Selbstverständlich könnte jedem Radträger 7, 8 bei ungünstigen Einbauverhältnissen ein eigener Hydraulikzylinder 10 in der hohlen Fahrachse zugeordnet sein, die beide mit einem Steuerventil zur gemeinsamen Steuerung beider Radträger 7, 8 verbunden sind.

Nach Fig. 1 und 2 ist ein zylindrischer Teil 11 des Hydraulik-, Arbeits- oder Hubzylinders 10 mit dem zum Rad 4 benachbarten Ende des Radträgers 7 und eine Kolbenstange 12 des Hydraulikzylinders 10 mit dem zum Rad 5 benachbarten Ende des Radträgers 8 fest verbunden.

Gemäss Fig. 1 sind die Radträger 7, 8 bis annähernd zur Mitte der Fahrachse 2 des nicht vollständig dargestellten Fahrzeuges 3 zusammengeschoben und bilden so eine schmale Spur, beispielsweise eine nach dem Strassenverkehrsgesetz vorgeschriebene Spurbreite.

Um die Spur der Fahrachse 2 nach Fig. 1 ändern resp. verbreitern zu können, weist die Einrichtung 1 an in Fortbewegungsrichtung F, F' paarweise parallelen Querträgern 13, 14 angelenkte Stützträger 15, 16 auf, die an der darunter angeordneten Fahrachse 2 resp. an den die Fahrachse 2 bildenden Radträgern 7, 8 jeweils schwenkbar gelagert sind, wobei die parallelen Querträger 13, 14 der Befestigung einer nicht ersichtlichen Ladebrücke oder eines Laderaumes oder speziellen Aufbaus dienen, siehe auch Fig. 3.

Damit die Spur nach Fig. 1 durch Ansteuerung des doppelwirkenden Hydraulikzylinders 10 verbreitert werden kann, sind die an den Querträgern 13, 14, benachbart zur Innenseite der Räder 4, 5, schwenkbar befestigten Stützträger 15, 16 zwischen den Schwenklagern an den Radträgern 7, 8 und den Querträgern 13, 14 durch ein an den Querträgern 13, 14 aufgehängtes Schubstangengetriebe 17 miteinander antriebsverbunden. Letzteres weist einen unterhalb des an diesen gelagerten Doppelhebel 18 auf, der um eine in Fortbewegungsrichtung F, F' parallele, vorzugsweise in der Längsmittelachse angeordnete Achse/Welle 19 gelagert und dessen schwenkbare Hebelenden 20, 21 jeweils durch Schubstangen 22, 23 mit den Stützträgern 15, 16 antriebsverbunden sind, so dass beim Ansteuern des Hydraulikzylinders 10 mit dem Ausstossen der Kolbenstange 12 aus der Position nach Fig. 1 die Räder 4, 5 durch die angetriebenen Stützträger 15, 16 über das Schubstangengetriebe 17 gemeinsam und gleichmässig, bezüglich der Längsmittelachse der Spur nach beiden Seiten verschoben werden.

Der einfachheithalber sind die Stützträger 15, 16 an den Radträgern 7, 8 jeweils in Fortbewegungsrichtung an Steckbolzen 24, 25 gelagert, an denen auch der Hydraulikzylinder 10 mit beiden Enden befestigt/eingespannt ist.

Zur Stabilisierung des Traggestells 6 (siehe auch Fig. 3) sind die Radträger 7,8 an ihrem freien, inneren Ende jeweils mit einer Aufhängevorrichtungen 26, 27 zur Verbindung der Querträger 13, 14 mit den die Fahrachse 2 bildenden Radträgern 7, 8 versehen.

Die Aufhängevorrichtungen 26, 27 sind jeweils an dem oberen Ende an den Querträgern 13, 14 und an dem unteren Ende, eine Anlenkstelle bildend, mit dem freien Ende der Radträger 7, 8 verbunden, und die Aufhängevorrichtungen 26, 27 weisen zwischen den Anlenkstellen die gleiche Länge und Lage innerhalb des Traggestells 6 wie die ihnen zugeordneten Stützträger 15, 16 auf. Die Form der Aufhängevorrichtungen 26, 27 entspricht aufgrund der Lage ihrer Verbindung zu den Anlenkstellen an den Querträgern 13, 14 und der die Fahrachse 2 bildenden Radträger 7, 8 einem gleichschenkligen Dreieck.

Die schwenkbaren Verbindungen der Anhängevorrichtungen 26, 27 einerseits zu den Querträgern 13, 14 und andererseits zu den Radträgern 7, 8 resp. der Fahrachse 2 erfolgte durch Steckzapfen 28, 29, die ein Gelenk bilden.

Fig. 2 zeigt die Einrichtung 1 für ein Strassen- und/oder Geländefahrzeug 3 mit einer gegenüber Fig. 1 veränderten resp. grösseren Spurbreite. Dieser Betriebszustand wurde während dem Fortbewegen der Fahrachse 2 bzw. dem Fahrzeug durch ein Ausstossen der Kolbenstange 12 aus dem zylindrischen Teil 11 des Hydraulikzylinders 10 erreicht.

Beide Räder 4, 5 wurden gleichmässig und gemeinsam aus der schmalen Spur auf beide Seiten verschoben, wobei das Mass der Verschiebung durch das nicht ersichtliche Steuerventil gewählt und geändert werden kann.

Auffallend ist, dass sich mit der Verbreiterung der Spur die Höhe der Querträger 13, 14 und damit die Ladehöhe nach unten verändert hat, ebenso der Schwerpunkt und das Kippmoment des Fahrzeuges. Dadurch kann bei einem gleichartigen Fahrzeug, insbesondere bei einer Futterbergungsgerät ein höheres Gewicht und/oder eine grössere Menge als bisher aufgenommen werden. D.h., das Fahrzeug weist insbesondere im Gelände eine verbesserte Bodenanpassungsfähigkeit auf, die auf den Verkehrsstrassen nicht mehr erforderlich ist und die Sicherheit nicht beeinträchtigt.

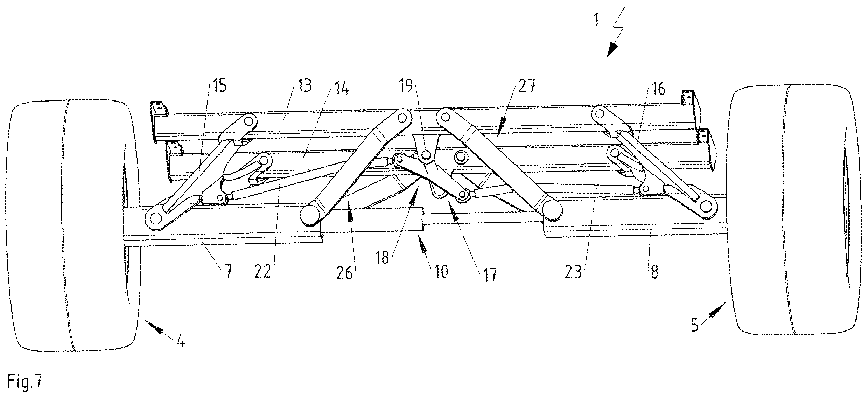

Zum leichteren Verständnis zeigt Fig. 7 die schon in Fig. 2 dargestellte verbreiterte Einrichtung 1 in räumlicher Darstellung.

Der Vorgang zur Änderung der Spur gemäss Fig. 2 ist dieser im Vergleich mit Fig. 1 nachvollziehbar zu entnehmen.

Der Hydraulikzylinder 10 hat die symmetrisch an der Längsmittelachse resp. den Querträgern 13, 14 angeordneten Radträger 7, 8 durch Auslenken der Stützträger 15, 16 in entgegengesetzte Richtungen über das an den Querträgern 13, 14 aufgehängte Schubstangengetriebe 17, -Doppelhebel 18, Schubstange 22 und Schubstange 23-, auf beide Räder 4, 5 wirkend ausgelöst.

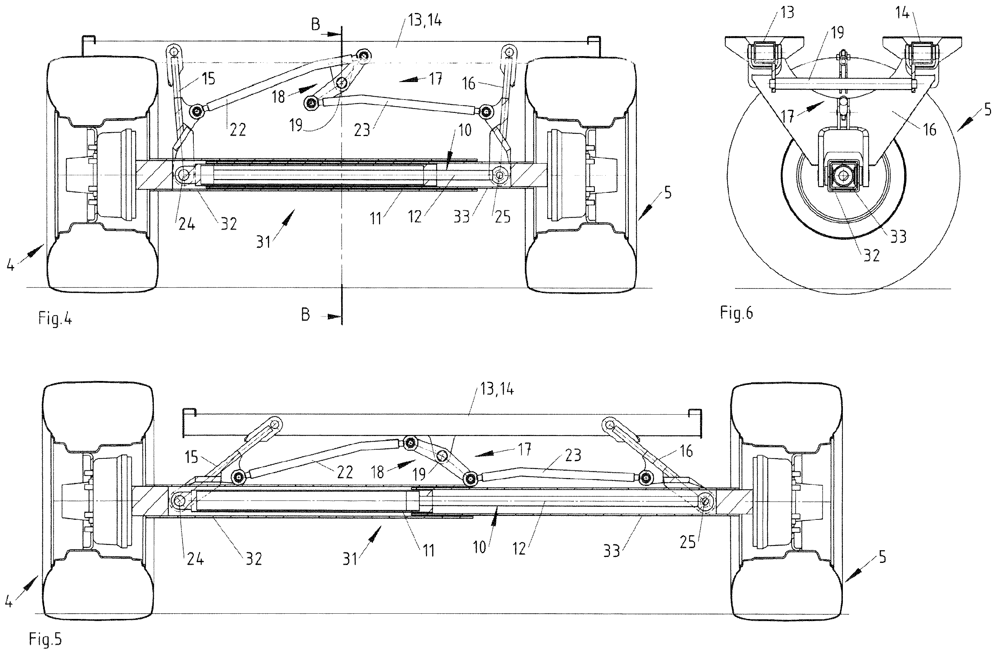

Eine alternative Ausführung der Einrichtung 1 zeigen die Fig. 4 bis 6, wobei der technische Unterschied im Wesentlichen auf der Ausbildung der Fahrachse 31 beruht. Diese ist aus zwei, jeweils den Rädern 4, 5 zugeordneten Radträgern 32, 33 gebildet, die teleskopartig geführt sind, wozu zwei Rohre, vorzugsweise zylindrische, mit unterschiedlichen Durchmessern verwendet sind. Innerhalb der als Radträger 32, 33 benutzten Rohre befindet sich der ansteuerbare Hydraulikzylinder 10, dessen zylindrischer Teil 11 vorzugsweise im Rohr mit dem grösseren Innendurchmesser resp. Rad 4 zugeordnet und die Kolbenstange 12 des Hydraulikzylinders 10 dem Radträger 33 mit dem geringeren Rohrdurchmesser resp. Rad 5 zugeordnet ist. Die Befestigung des Hydraulikzylinders 10 an den Enden innerhalb der Radträger 32, 33, resp. der Rohre, erfolgt vorteilhaft wie schon bei der Ausführung nach den Fig. 1 bis 3 durch Steckbolzen 24, 25, die für die Stützträger 15, 16 an den Radträgern 32, 33 resp. der Fahrachse 31 eine Schwenkachse bilden.

Sollte es sich erweisen, dass bei der Verwendung der Einrichtung 1 aufgrund eines grösseren und/oder schwereren Fahrzeug ein grösserer hydraulischer Kraftbedarf zur Verstellung der Spur erforderlich ist und sich die Fahrachse 2 zum Einbau eines grösseren Hydraulikzylinders 10 nicht eignet, kann ausserhalb und in Fortbewegungsrichtung F, F' vor und hinter der Fahrachse 2 ein zu dieser paralleler Hydraulikzylinder 10 angeordnet sein, die wie in den Fig. 1, 2, 4, 5 und 7 ersichtlich an verlängerten Steckbolzen 24, 25 der Stützträger 15, 16 befestigt sind.

Die Einrichtungen erlauben eine Verbreiterung der Spur von 2.33 m auf 3.13 m oder 2.55 m auf 3.35 m.

Die Fig. 8 bis 10 zeigen zwei Anwendungsbeispiele für die vorgeschlagene Einrichtung.

So zeigt Fig. 8 eine Seitenansicht eines an einen Traktor anhängbaren Einachsanhänger 36, ein Ladewagen zur Aufnahme von gemähtem Erntegut an der Frontseite.

Fig. 9 eine Seitenansicht eines selbstfahrendes Fahrzeug, auch Transporter bezeichnet, mit einer Tandem-Hinterachse, die, wie in Fig. 10 ersichtlich, der Ausführung nach den Fig. 1 bis 3 entspricht, wobei zur Aufnahme des Futters an der Heckseite ein Pic-up angeordnet ist.

## Patentansprüche

1. Einrichtung (1) zum Verstellen der Spur einer Fahrachse (2, 31) eines wenigstens einachsigen strassen- und/oder geländegängigen Fahrzeuges (3), vornehmlich eines Anhängers oder eines selbstfahrenden Motorfahrzeuges, bestehend aus einer quer zur Fortbewegungsrichtung (F, F') angeordneten Fahrachse (2, 31), die beidenends Räder (4, 5) und ein aufgebautes Traggestell (6) zur Befestigung eines Aufbaus, vorzugsweise einer Ladefläche, eines Laderaums oder Arbeitsgerätes aufweist, wobei die Fahrachse (2, 31) zwischen den Rädern (4, 5) durch tragende Stützelemente mit dem darüber angeordneten Traggestell (6) verbunden ist, wobei die an den Enden antreibbare Räder (4, 5) aufweisende Fahrachse (2, 31) durch sich horizontal in die Spur erstreckende Radträger (7, 8; 32, 33) ausgebildet ist, die mit wenigstens einem ventilgesteuerten Hydraulikzylinder (10) zur Spuränderung verbunden und durch angelenkte Stützträger (15, 16) mit wenigstens einem darüber angeordneten Querträger (13, 14) das Traggestell (6) bildend seitlich und entgegengesetzt verstellbar sind, **dadurch gekennzeichnet, dass** die Stützträger (15, 16) jeweils näherungsweise zu der Innenseite der Räder (4, 5) an den Radträgern (7, 8) angelenkt und durch ein an dem Querträger (13, 14) aufgehängtes Schubstangengetriebe (17) antriebsverbunden sind, und dass das Schubstangengetriebe (17) einen um eine in Fortbewegungsrichtung (F, F') angeordnete Achse (19) schwenkbaren Doppelhebel (18) aufweist, dessen Hebelenden (20, 21) jeweils durch Schubstangen (22, 23) mit den Stützträgern (15, 16) verbunden sind.

2. Einrichtung nach Anspruch 1, **dadurch gekennzeichnet, dass** die Radträger (7, 8) bzw. die Räder (4, 5) gemeinsam seitlich verstellbar sind.

3. Einrichtung nach einem der Ansprüche 1 oder 2, **dadurch gekennzeichnet, dass** der Hydraulikzylinder (10) innerhalb der Radträger (7, 8) in den Endbereichen der Fahrachse (2, 31) befestigt ist.

4. Einrichtung nach einem der Ansprüche 1 bis 3, **dadurch gekennzeichnet, dass** in Fortbewegungsrichtung (F, F') betrachtetet jeweils ein Hydraulikzylinder (10) parallel und vor und hinter der Fahrachse 2 angeordnet und mit den Enden an verlängerten Steckbolzen (24, 25) der Stützträger (15, 16) verbunden sind.

5. Einrichtung nach einem der Ansprüche 1 bis 4, **dadurch gekennzeichnet, dass** jedem Radträger (7, 8) ein Hydraulikzylinder (10) zugeordnet ist, die jeweils am Radträger (7, 8) einerseits und am Traggestell (6) andererseits abgestützt sind.

6. Einrichtung nach einem der Ansprüche 1 bis 5, **dadurch gekennzeichnet, dass** das Traggestell (6) durch zwei parallele Querträger (13, 14) ausgebildet ist, an denen die Stützträger (15, 16) angelenkt sind.

7. Einrichtung nach Anspruch 6, **dadurch gekennzeichnet, dass** die Querträger (13, 14) eine Befestigungsebene für den Fahrzeugaufbau bilden.

8. Einrichtung nach einem der Ansprüche 1 bis 7, **dadurch gekennzeichnet, dass** das Traggestell (6) quer zur Fortbewegungsrichtung (F, F') einen dreieckförmigen Querschnitt aufweist.

9. Einrichtung nach einem der Ansprüche 1 bis 8, **dadurch gekennzeichnet, dass** die die Fahrachse (2, 31) bildenden Radträger (7, 8) bei verbreiteter Spur mit den Stützträgern (15, 16) und den Querträgern (13, 14) ein räumlich trapezförmig verstellbares Traggestell (6) bilden.

10. Einrichtung nach Anspruch 9, **dadurch gekennzeichnet, dass** der Doppelhebel (18) vorzugsweise in der Längsmittelachse des Traggestells (6) an der Unterseite eines Querträger (13, 14) schwenkbar befestigt ist.

11. Einrichtung nach einem der Ansprüche 1 bis 10, **dadurch gekennzeichnet, dass** die Radträger (7, 8) jeweils an den inneren Enden durch eine der Stabilisierung des Traggestells (69 dienende Aufhängevorrichtungen (26, 27) mit dem/den Querträgern (13, 14) verbunden ist.

12. Einrichtung nach Anspruch 11, **dadurch gekennzeichnet, dass** die lenkerartigen Aufhängevorrichtungen (26, 27) die Länge und parallele Lage der Stützträger (15, 16) aufweisen.

13. Einrichtung nach einem der Ansprüche 1 bis 12, **dadurch gekennzeichnet, dass** die Fahrachse (31) durch teleskopartig geführte Radträger (32, 33) ausgebildet ist, die mit dem ventilgesteuerten, doppelwirkenden Hydraulikzylinder (10) antriebsverbunden sind.

14. Einrichtung nach Anspruch 13, **dadurch gekennzeichnet, dass** die Radträger (32, 33) rohrförmig ausgebildet und der Hydraulikzylinder (10) in den Endbereichen der Fahrachse (31) innerhalb der Radträger (32, 33) befestigt ist.

15. Einrichtung nach einem der Ansprüche 1 bis 14, **dadurch gekennzeichnet, dass** die Spur der Fahrachse (2, 31) während der Fortbewegung des Fahrzeuges (3) verstellbar ist.

## Claims

1. Device (1) for adjusting the track of a driving axle (2, 31) of an on-road and/or off-road vehicle (3) with at least one axle, primarily a trailer or a self-propelled motor vehicle, consisting of a driving axle (2, 31) which is arranged transversely with respect to the direction of travel (F, F') and has wheels (4, 5) at both ends and an assembled load-bearing frame (6) for fastening a superstructure, preferably a load bed, a luggage compartment or an implement, wherein the driving axle (2, 31) is connected between the wheels (4, 5) by load-bearing supporting elements to the load-bearing frame (6) arranged above it, wherein the driving axle (2, 31) which has drivable wheels (4, 5) at the ends is formed by wheel supports (7, 8; 32, 33) which are connected to at least one valve-controlled hydraulic cylinder (10) for track change and are laterally and oppositely adjustable by articulated support beams (15, 16) with at least one transverse beam (13, 14) arranged above them so as to form the load-bearing frame (6), **characterized in that** the support beams (15, 16) are each articulated on the wheel supports (7, 8) closely to the inner side of the wheels (4, 5) and are drive-connected by a push-rod mechanism (17) suspended on the transverse beam (13, 14), and **in that** the push-rod mechanism (17) has a double lever (18) which can be swivelled about an axis (19) arranged in the direction of travel (F, F') and the lever ends (20, 21) of which are each connected by push rods (22, 23) to the support beams (15, 16).

2. Device according to Claim 1, **characterized in that** the wheel supports (7, 8) or the wheels (4, 5) are jointly laterally adjustable.

3. Device according to either of Claims 1 or 2, **characterized in that** the hydraulic cylinder (10) is fastened within the wheel supports (7, 8) in the end regions of the driving axle (2, 31).

4. Device according to one of Claims 1 to 3, **characterized in that**, as viewed in the direction of travel (F, F'), in each case one hydraulic cylinder (10) is arranged parallel and in front of and behind the driving axle 2 and connected to the ends of extended locking pins (24, 25) of the support beams (15, 16).

5. Device according to one of Claims 1 to 4, **characterized in that** each wheel support (7, 8) is assigned a hydraulic cylinder (10), which hydraulic cylinders are supported on the wheel support (7, 8) on the one side and on the load-bearing frame (6) on the other side.

6. Device according to one of Claims 1 to 5, **characterized in that** the load-bearing frame (6) is formed by two parallel transverse beams (13, 14), on which the support beams (15, 16) are articulated.

7. Device according to Claim 6, **characterized in that** the transverse beams (13, 14) form a fastening plane for the vehicle superstructure.

8. Device according to one of Claims 1 to 7, **characterized in that** the load-bearing frame (6) has a triangular cross section transversely with respect to the direction of travel (F, F').

9. Device according to one of Claims 1 to 8, **characterized in that** the wheel supports (7, 8) forming the driving axle (2, 31) form a spatially trapezoidally adjustable load-bearing frame (6) with the support beams (15, 16) and the transverse beams (13, 14) in the case of a widened track.

10. Device according to Claim 9, **characterized in that** the double lever (18) is pivotably fastened to the underside of a transverse beam (13, 14), preferably in the longitudinal centre axis of the load-bearing frame (6).

11. Device according to one of Claims 1 to 10, **characterized in that** the wheel supports (7, 8) are connected in each case at the inner ends by one of the suspension apparatuses (26, 27), serving for the stabilization of the load-bearing frame (69), to the transverse beam/beams (13, 14).

12. Device according to Claim 11, **characterized in that** the link-like suspension apparatuses (26, 27) have the length and parallel position of the support beams (15, 16).

13. Device according to one of Claims 1 to 12, **characterized in that** the driving axle (31) is formed by telescopically guided wheel supports (32, 33) which are drive-connected to the valve-controlled, double-acting hydraulic cylinder (10).

14. Device according to Claim 13, **characterized in that** the wheel supports (32, 33) are of tubular form, and the hydraulic cylinder (10) is fastened in the end regions of the driving axle (31) within the wheel supports (32, 33).

15. Device according to one of Claims 1 to 14, **characterized in that** the track of the driving axle (2, 31) is adjustable while the vehicle (3) is travelling.

## Revendications

1. Dispositif (1) de réglage de la voie d'un essieu de roulement (2, 31) d'un véhicule (3) routier et/ou tout terrain à au moins un essieu, essentiellement d'une remorque ou d'un véhicule automobile automoteur, constitué d'un essieu de roulement (2, 31) disposé transversalement à la direction de déplacement (F, F'), lequel essieu présente aux deux extrémités des roues (4, 5) et un cadre porteur (6) monté pour la fixation d'une carrosserie, de préférence d'une surface de chargement, d'un espace de chargement ou d'un appareil de travail, l'essieu de roulement (2, 31) étant relié au cadre porteur (6) disposé au-dessus de celui-ci par des éléments de support porteurs entre les roues (4, 5), l'essieu de roulement (2, 31) présentant des roues (4, 5) pouvant être entraînées aux extrémités étant réalisé par des supports de roue (7, 8 ; 32, 33) s'étendant horizontalement dans la voie, lesquels sont reliés à au moins un cylindre hydraulique (10) commandé par soupape pour le changement de voie et peuvent être réglés latéralement et en sens opposés par des supports d'appui (15, 16) articulés avec au moins une traverse (13, 14) disposée au-dessus de ceux-ci en formant le cadre porteur (6), **caractérisé en ce que** les supports d'appui (15, 16) sont articulés sur les supports de roue (7, 8) respectivement approximativement par rapport au côté intérieur des roues (4, 5) et sont reliés par entraînement par une transmission à bielles de poussée (17) suspendue à la traverse (13, 14), et **en ce que** la transmission à bielles de poussée (17) présente un levier double (18) pivotant autour d'un axe (19) disposé dans la direction de déplacement (F, F'), levier dont les extrémités de levier (20, 21) sont reliées respectivement aux supports d'appui (15, 16) par des bielles de poussée (22, 23).

2. Dispositif selon la revendication 1, **caractérisé en ce que** les supports de roue (7, 8) ou les roues (4, 5) peuvent être réglés latéralement ensemble.

3. Dispositif selon l'une des revendications 1 ou 2, **caractérisé en ce que** le cylindre hydraulique (10) est fixé dans les régions d'extrémité de l'essieu de roulement (2, 31) à l'intérieur des supports de roue (7, 8).

4. Dispositif selon l'une des revendications 1 à 3, **caractérisé en ce que**, considéré dans la direction de déplacement (F, F'), un cylindre hydraulique (10) est disposé respectivement parallèlement et devant et derrière l'essieu de roulement (2) et est relié par les extrémités au niveau de boulons enfichables (24, 25) allongés des supports d'appui (15, 16).

5. Dispositif selon l'une des revendications 1 à 4, **caractérisé en ce qu'**un cylindre hydraulique (10) est associé à chaque support de roue (7, 8), lesquels cylindres hydrauliques sont supportés respectivement sur le support de roue (7, 8) d'une part et sur le cadre porteur (6) d'autre part.

6. Dispositif selon l'une des revendications 1 à 5, **caractérisé en ce que** le cadre porteur (6) est formé par deux traverses (13, 14) parallèles sur lesquelles les supports d'appui (15, 16) sont articulés.

7. Dispositif selon la revendication 6, **caractérisé en ce que** les traverses (13, 14) forment un plan de fixation pour la carrosserie de véhicule.

8. Dispositif selon l'une des revendications 1 à 7, **caractérisé en ce que** le cadre porteur (6) présente une section transversale triangulaire transversalement à la direction de déplacement (F, F').

9. Dispositif selon l'une des revendications 1 à 8, **caractérisé en ce que** les supports de roue (7, 8) formant l'essieu de roulement (2, 31), lorsque la voie est élargie, forment avec les supports d'appui (15, 16) et les traverses (13, 14) un cadre porteur (6) pouvant être réglé de manière trapézoïdale spatialement.

10. Dispositif selon la revendication 9, **caractérisé en ce que** le levier double (18) est fixé de manière pivotante au côté inférieur d'une traverse (13, 14) de préférence dans l'axe médian longitudinal du cadre porteur (6).

11. Dispositif selon l'une des revendications 1 à 10, **caractérisé en ce que** les supports de roue (7, 8) sont reliés à la/aux traverse(s) (13, 14) respectivement aux extrémités internes par un dispositif de suspension (26, 27) servant à la stabilisation du cadre porteur (69).

12. Dispositif selon la revendication 11, **caractérisé en ce que** les dispositifs de suspension (26, 27) de type bras oscillant présentent la longueur et la position parallèle des supports d'appui (15, 16).

13. Dispositif selon l'une des revendications 1 à 12, **caractérisé en ce que** l'essieu de roulement (31) est formé par des supports de roue (32, 33) guidés de manière télescopique, lesquels sont reliés par entraînement à l'aide du cylindre hydraulique (10) à double action commandé par soupape.

14. Dispositif selon la revendication 13, **caractérisé en ce que** les supports de roue (32, 33) sont réalisés de manière tubulaire et le cylindre hydraulique (10) est fixé à l'intérieur des supports de roue (32, 33) dans les régions d'extrémité de l'essieu de roulement (31).

15. Dispositif selon l'une des revendications 1 à 14, **caractérisé en ce que** la voie de l'essieu de roulement (2, 31) peut être réglée pendant le déplacement du véhicule (3).
